# EUROPÄISCHE PATENTSCHRIFT

(11) **EP 3 427 013 B1**
(45) Veröffentlichungstag und Bekanntmachung des Hinweises auf die Patenterteilung: **25.08.2021**
(21) Anmeldenummer: 17704471.6
(22) Anmeldetag: 13.02.2017
(51) Int. Cl.: G01F 1/32

(54) **SENSORBAUGRUPPE FÜR EINEN SENSOR, SENSOR SOWIE DAMIT GEBILDETES MESSSYSTEM**
SENSOR ASSEMBLY GROUP FOR A SENSOR, SENSOR AND MEASUREMENT SYSTEM BUILT THEREWITH
GROUPE D'ASSEMBLAGE POUR UN CAPTEUR, CAPTEUR ET SYSTÈME DE MESURE CONSTRUIT AVEC CELUI-CI

(30) Priorität: 10.03.2016 DE 102016104423
(43) Veröffentlichungstag der Anmeldung: 16.01.2019
(73) Patentinhaber: Endress+Hauser Flowtec AG, 4153 Reinach (CH)
(72) Erfinder: LAIS, Christian, 4142 Münchenstein (CH); STRUB, Andreas, 79576 Weil am Rhein (DE); WIEDERKEHR, Dominique, 62880 Hagenthal-le-bas (FR)
(74) Vertreter: Andres, Angelika Maria
(86) Internationale Anmeldenummer: PCT/EP2017/053101
(87) Internationale Veröffentlichungsnummer: WO 2017/153124

(56) Entgegenhaltungen:
- WO-A1-00/09973
- DE-A1-102013 105 363
- DE-A1-102014 112 558
- DE-U1- 8 107 108
- US-A1- 2004 216 532

## Beschreibung

Die Erfindung betrifft eine Sensorbaugruppe mit einem, insb. membranartigen und/oder scheibenförmigen, Verformungskörper sowie eine sich ausgehend von einer Oberfläche nämlichen Verformungskörpers erstreckende Sensorfahne. Ferner betrifft die Erfindung einen mittels einer solchen Sensorbaugruppe gebildeten Sensor bzw. damit gebildetes Meßsystem bzw. dessen Verwendung zum Erfassen von Druckschwankungen in einem strömenden Fluid und/oder zum Messen wenigstens eines Strömungsparameters eines in einer Rohrleitung strömenden Fluids.

In der Prozeßmeß- und Automatisierungstechnik werden für die Messung von Strömungsgeschwindigkeiten von in Rohrleitungen strömenden Fluiden, insb. schnellströmenden und/oder heißen Gasen und/oder Fluidströmen von hoher Reynoldszahl (Re), bzw. von mit einer jeweiligen Strömungsgeschwindigkeit (u) korrespondierenden Volumen- oder Massen-Durchflußraten oftmals als Vortex-Durchflußmeßgeräte ausgebildete Meßsysteme verwendet.

Beispiele für solche, Meßsysteme sind u.a. aus der der US-A 2006/0230841, der US-A 2008/0072686, der US-A 2011/0154913, der US-A 2011/0247430, der US-A 60 03 384, der US-A 61 01 885, der US-B 63 52 000, der US-B 69 10 387 oder der US-B 69 38 496 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200".

Die DE 10 2013 105363 A1 spezifiziert eine Sensorbaugruppe für einen Sensor zum Erfassen von Druckschwankungen in einer in einem strömenden Fluid ausgebildeten Kármánschen Wirbelstraße, welcher Teil eines Meßsystems ist.

Die gezeigten Meßsysteme weisen jeweils einen in das Lumen der jeweiligen, beispielsweise nämlich als Anlagenkomponente eines Wärmeversorgungsnetzes oder eines Turbinenkreislaufes ausgebildeten, Rohrleitung bzw. in ein Lumen eines in den Verlauf nämlicher Rohrleitung eingesetzten Meßrohrs hineinragenden, mithin vom Fluid angeströmten Staukörper zum Erzeugen von zu einer sogenannten *Kármánschen* Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit des in einer Hauptströmungsrichtung durch das Meßrohr strömenden Fluids abhängigen Ablöserate (1/f_{Vtx}) am Staukörper generiert.

Ferner weisen die Meßsysteme einen in den Staukörper integrierten bzw. mit diesem verbundenen oder stromabwärts desselben, nämlich im Bereich der Karman'schen Wirbelstrasse in die Strömung, mithin in Lumen der hineinragenden Sensor auf, der dazu dient Druckschwankungen in der im strömenden Fluid ausgebildeten *Kármánschen* Wirbelstrasse zu erfassen und in ein die Druckschwankungen repräsentierendes Sensorsignal zu wandeln, nämlich ein - beispielsweise elektrisches oder optisches - Signal zu liefern, das mit einem innerhalb des Fluids herrschenden, infolge gegenläufiger Wirbel stromab des Staukörpers periodischen Schwankungen unterworfenen Druck korrespondiert bzw. das eine mit der Ablöserate der Wirbel korrespondierende Signalfrequenz (∼ f_{Vtx}) aufweist.

Der Sensor weist dafür eine mittels eines - zumeist als dünne und im wesentlichen flachen Membran ausgebildeten - Verformungskörper sowie einer sich ausgehend von einer im wesentlichen planaren Oberfläche nämlichen Verformungskörpers erstreckenden - zumeist plattenförmigen bzw. keilförmigen - Sensorfahne gebildete Sensorbaugruppe auf, die dafür eingerichtet ist, in einer quer zur eigentlichen Hauptströmungsrichtung verlaufenden Detektionsrichtung wirkende Druckschwankungen in der *Kármánschen* Wirbelstrasse zu erfassen, nämlich in mit den Druckschwankungen korrespondierende Bewegungen des Verformungskörpers zu wandeln, derart, daß die Sensorfahne infolge der Druckschwankungen den Verformungskörper elastisch verformende Pendelbewegungen in Detektionsrichtung ausführt, wodurch Verformungskörper und Sensorfahne zu erzwungene Schwingungen um eine gemeinsame statischen Ruhelage angeregt werden. Der Verformungskörper weist ferner ein - zumeist kreisringförmiges - äußeres Randsegment auf, das dafür eingerichtet ist, mit einer dem Haltern des Verformungskörper bzw. des damit gebildeten Sensors an einer Wandung eines Rohrs dienenden Fassung hermetisch dicht, beispielsweise nämlich stoffschlüssige, verbunden zu werden, derart, daß der Verformungskörper eine in der Wandung des Rohrs vorgesehene Öffnung überdeckt bzw. hermetisch verschließt und daß die die Sensorfahne tragende Oberfläche des Verformungskörpers dem Fluid führenden Lumen des Meßrohrs bzw. der Rohrleitung zugewandt ist, mithin die Sensorfahne in nämliches Lumen hineinragt.

Nachdem der Verformungsköper typischerweise membranartig bzw. scheibenförmig ausgebildet ist, ist eine Dicke des die Sensorfahne tragenden, gleichwohl durch das äußere Randsegment begrenzten inneren Segments des Verformungskörpers zumeist sehr viel kleiner als ein größter Durchmesser einer durch das äußere Randsegment begrenzten Fläche nämlichen Segments. Um eine ausreichend hohe Meßempfindlichkeit, nämliche eine ausreichend hohe Empfindlichkeit des Sensors auf die zu erfassenden Druckschwankungen zu erzielen, weisen Verformungskörper etablierter Meßsysteme typischerweise ein entsprechendes Durchmesser-zu-Dicke-Verhältnis auf, das etwa in der Größenordnung von 20:1 liegt. Wie u.a. in der eingangs erwähnten US-B 63 52 000 gezeigt, können Sensorbaugruppen der vorbezeichneten Art gelegentlich zudem einen sich ausgehend von einer der die Sensorfahne tragende Oberfläche abgewandten Oberfläche des Verformungskörpers erstreckenden, zumeist stab-, platten- oder hülsenförmig ausgebildeten Ausgleichskörper aufweisen, der im besonderen dazu dient, aus Bewegungen der Sensorbaugruppe resultierenden Kräften bzw. Momenten, beispielsweise infolge von Vibrationen der Rohrleitung, zu kompensieren bzw. daraus resultierende unerwünschte Bewegungen der Sensorfahne zu vermeiden.

Zwecks des Generierens des Sensorsignals umfaßt der Sensor ferner ein entsprechendes, beispielsweise nämlich mittels eines mit der Sensorbaugruppe mechanisch gekoppelten bzw. darin integrierten Kondensator oder mittels eines als piezoelektrischer Wandler dienenden Piezostapel gebildetes, Wandelerelement, das dafür eingerichtet ist, Bewegungen des Verformungskörpers, nicht zuletzt auch mit Druckschwankungen korrespondierende Bewegungen des Verformungskörpers, bzw. des ggf. vorhandenen Ausgleichskörper zu erfassen und einem elektrischen oder optischen Trägersignal aufzumodulieren.

Die Sensorbaugruppe bzw. der damit gebildete Sensor ist auf einer dem Fluid führenden Lumen abgewandten Seite ferner mit einer - typischerweise druck- und schlagfest gekapselten, ggf. auch nach außen hin hermetisch abgedichteten - Umformer-Elektronik verbunden. Umformer-Elektronik industrietauglichen Meßsysteme weisen üblicherweise eine entsprechende, mit dem Wandlerelement via Anschlußleitungen, ggf. unter Zwischenschaltung elektrischer Barrieren und/oder galvanischer Trennstellen, elektrisch verbundene digitale Meßschaltung zum Verarbeiten des wenigstens einen vom Wandlerelement erzeugten Sensorsignals und zum Erzeugen von digitalen Meßwerten für die jeweils zu erfassende Meßgröße, nämlich die Strömungsgeschwindigkeit, die Volumen-Durchflußrate und/oder die Massen-Durchflußrate, auf. Die üblicherweise in einem Schutz-Gehäuse aus Metall und/oder schlagfestem Kunststoff untergebrachte Umformer-Elektronik industrietauglicher bzw. in der industriellen Meßtechnik etablierter Meßsysteme stellen zudem zumeist auch einem Industriestandard, beispielsweise der DIN IEC 60381-1, konforme externe Schnittstellen für die Kommunikation mit übergeordneten, beispielsweise mittels Speicherprogrammierten Steuerungen (SPS) gebildete, Meß- und/oder Reglersysteme bereit. Ein solche externe Schnittstelle kann beispielsweise als in eine Stromschleife eingliederbarer Zweileiter-Anschluß ausgebildete und/oder mit etablierten industriellen Feldbussen kompatible ausgebildet sein.

Aufgrund des Meßprinzip bedingt jeweils relativ hohen Durchmesser-zu-Dicke-Verhältnisses des jeweiligen Verformungskörpers können konventionelle Sensoren der in Rede stehenden Art - selbst bei Verwendung einer hochfesten Nickelbasislegierung, wie z.B. Inconel 718 (Special Metals Corp.), als Material für den Verformungskörper - in für solche Sensoren eigentlich prädestinierten Anwendungen mit Fluidtemperaturen von über 400°C, wie z.B. (Heiß-) Dampfanwendungen, gelegentlich übererhöhte, nämlich weit über eine Spezifikation des jeweiligen Meßsystems hinausgehende Meßfehler aufweisen. Diese können in Dampfanwendungen u.a. darauf zurückgeführt werden, daß die Sensorbaugruppe bzw. deren Verformungskörper, beispielsweise infolge sogenannter kondensationsinduzierter Wasserschläge (CIWH - condensation induced water hammers), kurzzeitig sehr hohen Drücken mit Druckspitzen von über 140 bar bzw. starken Druckstößen und/oder extrem starken (zeitlichen) Temperaturschwankungen ausgesetzt ist, einhergehend mit gleichermaßen überhöhten, nämlich dann über die mit der Spezifikation des jeweiligen Meßsystems korrespondierenden Belastungsgrenzen hinausgehenden Deformationen des Verformungskörpers. Die vorbezeichneten Deformationen können gelegentlich sogar plastisch, mithin irreversibel sein.

Ausgehend davon besteht eine Aufgabe der Erfindung darin, den Aufbau von Sensorbaugruppen der in Rede stehenden Art dahingehend zu verbessern, daß damit gebildete Sensoren ein im Vergleich zu konventionellen Sensoren geringere Empfindlichkeit auf Druckstöße bzw. Temperaturschwankungen, mithin eine verbesserte Meßgenauigkeit auch in kondensationsinduzierte Wasserschläge provozierenden Heißdampfanwendungen aufweisen.

Zur Lösung der Aufgabe besteht die Erfindung in einer Sensorbaugruppe für einen Sensor - beispielsweise nämlich eine Sensorbaugruppe für einen Sensor zum Erfassen von Druckschwankungen in einer in einem strömenden Fluid ausgebildeten *Kármánschen* Wirbelstrasse und/oder Sensorbaugruppe, die dafür eingerichtet ist von einem strömenden Fluid kontaktiert zu werden -, welche Sensorbaugruppe umfaßt:
- einen, beispielsweise membranartigen und/oder scheibenförmigen, Verformungskörper mit einer ersten Oberfläche, einer gegenüberliegenden, insb. zur ersten Oberfläche zumindest teilweise parallelen, zweiten Oberfläche und einem, beispielsweise kreisringförmigen und/oder mit einer Dichtfläche versehenen, äußeren Randsegment;
- eine sich ausgehend von der ersten Oberfläche des Verformungskörpers bis zu einem distalen Ende erstreckende, beispielsweise plattenförmige oder keilförmige, Sensorfahne;
- sowie eine Schutzvorrichtung zum Schutz des Verformungskörpers vor Druckstößen gegen dessen erste Oberfläche und/oder zum Schutz des Verformungskörpers vor sprunghaften Änderungen einer Temperatur an dessen erster Oberfläche,
- wobei die Schutzvorrichtung wenigstens eine an das Randsegment des Verformungskörpers angrenzende Platte aufweist, die sich radial einwärts in Richtung der Sensorfahne erstreckt derart,
   -- daß zwischen Platte und Verformungskörper eine, beispielsweise nämlich ringförmige bzw. ringscheibenförmige, Kavität gebildet ist, die einen an die erste Oberfläche des Verformungskörpers angrenzenden, gleichwohl vom distalen Ende der Sensorfahne entfernten Bereich der Sensorfahne aufnimmt,
   -- und daß zwischen Platte und Sensorfahne ein, beispielsweise ringförmiger, Spalt gebildet ist.

Darüberhinaus besteht die Erfindung in einem Sensor zum Erfassen von Druckschwankungen in einem strömenden Fluid, beispielsweise zum Erfassen von Druckschwankungen in einer im strömenden Fluid ausgebildeten *Kármánschen* Wirbelstrasse, welcher Sensor eine solche Sensorbaugruppe sowie ein Wandlerelement zum Generieren eines zeitlich ändernde, beispielsweise zumindest zeitweise periodische, Bewegungen der Sensorfahne und/oder zeitlich ändernde, beispielsweise zumindest zeitweise periodische, Verformungen des Verformungskörper repräsentierenden, beispielsweise elektrischen oder optischen, Sensorsignals umfaßt.

Ferner besteht die Erfindung in einem Meßsystem zum Messen wenigstens eines, beispielsweise zeitlich veränderlichen, Strömungsparameters, beispielsweise einer Strömungsgeschwindigkeit und/oder einer Volumendurchflußrate, eines in einer Rohrleitung strömenden Fluids, welches Meßsystem einen Sensor zum Erfassen von Druckschwankungen im strömenden Fluid, beispielsweise nämlich zum Erfassen von Druckschwankungen in einer im strömenden Fluid ausgebildeten *Kármánschen* Wirbelstrasse, sowie eine Meß-Elektronik umfaßt, die dafür eingerichtet ist, das Sensorsignal zu empfangen und zu verarbeiten, beispielsweise nämlich den wenigstens einen Strömungsparameter repräsentierende Meßwerte zu generieren.

Ein weiterer Aspekt der Erfindung besteht darin, ein vorbezeichnetes Meßsystem zum Messen eines Strömungsparameters - beispielsweise nämlich einer Strömungsgeschwindigkeit und/oder einer Volumendurchflußrate und/oder einer Massendurchflußrate - eines in einer Rohrleitung strömenden, beispielsweise zumindest zeitweise eine Temperatur von mehr als 400°C und/oder zumindest zeitweise mit einem Druck von mehr als 140 bar auf den Verformungskörper und/oder die Sensorfahne des Sensors wirkenden, Fluids, beispielsweise einem Dampf, zu verwenden.

Nach einer ersten Ausgestaltung der Sensorbaugruppe der Erfindung ist vorgesehen, daß die Platte der Schutzvorrichtung sowohl vom Verformungskörper als auch von der Sensorfahne beabstandet ist.

Nach einer zweiten Ausgestaltung der Sensorbaugruppe der Erfindung ist vorgesehen, daß die Platte der Schutzvorrichtung weder den Verformungskörper noch die Sensorfahne kontaktiert.

Nach einer dritten Ausgestaltung der Sensorbaugruppe der Erfindung ist die Sensorfahne dafür eingerichtet, in ein Fluid eingetaucht bzw. an einem sich zwischen deren distalen Ende und der Platte erstreckenden Bereich von einem Fluid umströmt zu werden. Diese Ausgestaltung der Erfindung weiterbildend ist die Kavität ferner dafür eingerichtet, ein Teilvolumen des Fluids aufzunehmen bzw. via Spalt, insb. nämlich lediglich via Spalt, von einem Teilvolumen des Fluids gefüllt zu werden.

Nach einer vierten Ausgestaltung der Sensorbaugruppe der Erfindung ist die Sensorfahne dafür eingerichtet, in ein Lumen eines ein strömendes Fluid führenden Rohrs eingesetzt bzw. an einem sich zwischen deren distalen Ende und der Platte erstreckenden Bereich von einem im Lumen nämlichen Rohres geführten Fluid umströmt zu werden. Diese Ausgestaltung der Erfindung weiterbildend ist Kavität ferner dafür eingerichtet, via Spalt, insb. nämlich lediglich via Spalt, mit dem Lumen des Rohrs zu kommunizieren.

Nach einer fünften Ausgestaltung der Sensorbaugruppe der Erfindung ist vorgesehen, daß die Platte mittels, insb. genau, zweier, insb. baugleichen bzw. gleichgroßen, Plattensegmenten gebildet ist, beispielsweise nämlich derart, daß die beiden Plattensegmente unter Bildung von jeweils in den Ringspalt übergehenden Stoßkanten einander gegenüberliegen. Diese Ausgestaltung der Erfindung weiterbildend ist ferner vorgesehen, daß die zwei Plattensegmente zumindest abschnittsweise stoffschlüssig miteinander verbunden sind, etwa derart, daß die beiden Plattensegmente an einander gegenüberliegenden Stoßkanten miteinander verschweiß oder verlötet sind.

Nach einer sechsten Ausgestaltung der Sensorbaugruppe der Erfindung sind der Verformungskörper und die Sensorfahne ferner dafür eingerichtet, zu, beispielsweise erzwungenen, Schwingungen um eine gemeinsame statische Ruhelage angeregt und dabei relativ zur Schutzvorrichtung bewegt zu werden, derart, daß die Sensorfahne den Verformungskörper elastisch verformende Pendelbewegungen ausführt.

Nach einer siebenten Ausgestaltung der Sensorbaugruppe der Erfindung sind der Verformungskörper, die Sensorfahne und die Schutzvorrichtung so bemessen und angeordnet, daß bei gemeinsam mit dem Verformungskörper in gemeinsamer statischer Ruhelage befindlicher Sensorfahne diese die Platte der Schutzvorrichtung nicht kontaktiert.

Nach einer achten Ausgestaltung der Sensorbaugruppe der Erfindung sind der Verformungskörper, die Sensorfahne und die Schutzvorrichtung, insb. nämlich die Platte der Schutzvorrichtung, so bemessen und angeordnet, daß der Spalt bei gemeinsam mit dem Verformungskörper in gemeinsamer statischer Ruhelage befindlicher Sensorfahne eine minimale Spaltbreite aufweist, die größer als 0,02 mm und/oder kleiner als 0,5 mm ist.

Nach einer neunten Ausgestaltung der Sensorbaugruppe der Erfindung sind der Verformungskörper, die Sensorfahne und die Schutzvorrichtung, insb. nämlich die Platte der Schutzvorrichtung, so bemessen und angeordnet, daß der Spalt bei gemeinsam mit dem Verformungskörper in gemeinsamer statischer Ruhelage befindlicher Sensorfahne eine maximale Spaltbreite aufweist, die kleiner als 0,5 mm und/oder größer als 0,02 mm ist.

Nach einer zehnten Ausgestaltung der Sensorbaugruppe der Erfindung ist vorgesehen, daß die Platte der Schutzvorrichtung zumindest anteilig, beispielsweise überwiegend oder vollständig, aus einem Metall, wie z.B. einem Edelstahl bzw. einer Nickelbasislegierung, besteht.

Nach einer elften Ausgestaltung der Sensorbaugruppe der Erfindung ist vorgesehen, daß der Verformungskörper und die Platte der Schutzvorrichtung aus einem gleichen Material bestehen.

Nach einer zwölften Ausgestaltung der Sensorbaugruppe der Erfindung ist vorgesehen, daß der Verformungskörper und die Platte der Schutzvorrichtung Bestandteile ein und desselben, beispielsweise gegossenen oder durch 3D-Laserschmelzen hergestellten, monolithischen Formteils sind.

Nach einer dreizehnten Ausgestaltung der Sensorbaugruppe der Erfindung ist vorgesehen, daß Verformungskörper und Sensorfahne Bestandteile ein und desselben, beispielsweise gegossenen oder durch 3D-Laserschmelzen hergestellten, monolithischen Formteils sind.

Nach einer vierzehnten Ausgestaltung der Sensorbaugruppe der Erfindung ist vorgesehen, daß Verformungskörper und die Platte der Schutzvorrichtung stoffschlüssig miteinander verbunden, beispielsweise nämlich miteinander verschweißt bzw. verlötet, sind.

Nach einer fünfzehnten Ausgestaltung der Sensorbaugruppe der Erfindung ist vorgesehen, daß Verformungskörper und Sensorfahne stoffschlüssig miteinander verbunden, beispielsweise nämlich miteinander verschweißt bzw. verlötet, sind.

Nach einer ersten Ausgestaltung des Meßsystems der Erfindung ist vorgesehen, daß in der Wandung des Rohrs eine, beispielsweise eine dem Haltern des Verformungskörpers an der Wandung dienende Fassung aufweisende, Öffnung ausgebildet ist, und daß der Sensor in nämliche Öffnung eingesetzt ist, derart, daß der Verformungskörper die Öffnung überdeckt, beispielsweise nämlich hermetisch verschließt, und daß die erste Oberfläche des Verformungskörpers dem Lumen des Rohrs zugewandt ist, mithin die Sensorfahne in nämliches Lumen hineinragt.
Diese Ausgestaltung der Erfindung weiterbildend ist ferner vorgesehen, daß die Öffnung eine dem Haltern des Verformungskörpers an der Wandung dienende Fassung aufweist. In nämlicher Fassung kann ferner wenigstens eine, beispielsweise umlaufende und/oder kreisringartige, Dichtfläche ausgebildet sein. Darüberhinaus kann zudem auch im Randsegment wenigstens eine, beispielsweise umlaufende und/oder kreisringartige, Dichtfläche ausgebildet sein, und können nämliche Dichtfläche sowie die Dichtfläche der Fassung für ein hermetisches Verschließen der Öffnung, beispielsweise auch unter Zwischenlage wenigstens einer Dichtung, eingerichtet sein.

Nach einer ersten Weiterbildung des Meßsystems der Erfindung umfaßt dieses weiters ein in den Verlauf der Rohrleitung einsetzbares Rohr mit einem Lumen, das dafür eingerichtet ist, das in der Rohrleitung strömende Fluid zu führen, wobei der Sensor in nämliches Rohr eingesetzt ist, derart, daß die erste Oberfläche des Verformungskörpers dem Lumen des Rohrs zugewandt ist und die Sensorfahne in nämliches Lumen hineinragt.
Nach einer ersten der Ausgestaltung der ersten Weiterbildung des Meßsystems ist ferner vorgesehen, daß die Sensorfahne eine Länge, gemessen als minimaler Abstand zwischen einem proximalen, nämlich an den Verformungskörper grenzenden Ende der Sensorfahne bis zu einem distalen, nämlich vom Verformungskörper bzw. dessen Oberfläche entfernten Ende der Sensorfahne aufweist, wobei die Länge weniger als 95% eines Kalibers des Rohrs und/oder mehr als einer Hälfte nämlichen Kalibers entspricht.

Nach einer zweiten Weiterbildung des Meßsystems der Erfindung umfaßt dieses weiters ein in den Verlauf der Rohrleitung einsetzbares Rohr mit einem Lumen, das dafür eingerichtet ist, das in der Rohrleitung strömende Fluid zu führen, wobei in der Wandung des Rohrs eine, insb. eine dem Haltern des Verformungskörpers an der Wandung dienende Fassung aufweisende, Öffnung ausgebildet ist, und wobei der Sensor in nämliche Öffnung eingesetzt ist, derart, daß der Verformungskörper die Öffnung überdeckt, insb. nämlich hermetisch verschließt, und daß die erste Oberfläche des Verformungskörpers dem Lumen des Rohrs zugewandt ist, mithin die Sensorfahne in nämliches Lumen hineinragt.
Nach einer ersten der Ausgestaltung der zweiten Weiterbildung des Meßsystems ist ferner vorgesehen, daß die Sensorfahne eine Länge, gemessen als minimaler Abstand zwischen einem proximalen, nämlich an den Verformungskörper grenzenden Ende der Sensorfahne bis zu einem distalen, nämlich vom Verformungskörper bzw. dessen Oberfläche entfernten Ende der Sensorfahne aufweist, wobei die Länge weniger als 95% eines Kalibers des Rohrs und/oder mehr als einer Hälfte nämlichen Kalibers entspricht.

Nach einer dritten Weiterbildung des Meßsystems der Erfindung umfaßt dieses weiters einen im Lumen des Rohrs angeordneten Stauköper, der dafür eingerichtet ist, im strömendem Fluid eine *Kármánsche* Wirbelstrasse zu bewirken.

Ein Grundgedanke der Erfindung besteht darin, die für die Sensorbaugruppe angestrebte geringe Empfindlichkeit auf Druckstöße bzw. Temperaturschwankungen dadurch herbeizuführen, indem der Verformungskörper einerseits mittels einer davon beabstandeten, vorgelagerten Platte gegen das im Betrieb vorbeiströmende Fluid abgeschirmt ist, und indem anderseits zwischen nämlicher Platte und dem Verformungskörper ein zum Lumen des Fluid führenden Rohrs hin offener, nämlich über einen zwischen Platte und Sensorfahne gebildeten Spalt mit dem Lumen kommunizierender Kavität gebildet ist, die im Betrieb des jeweiligen Meßsystems mit Fluid gefüllt ist. Im Betrieb der erfindungsgemäßen Sensorbaugruppe bzw. des damit gebildeten Meßsystems wirken das in der Kavität eingeschlossene Fluidvolumen sowie die Platte im Zusammenspiel als ein allfällige Temperaturschwankungen dämpfendes thermisches Tiefpaß bzw. wirken der Verformungskörper, der Spalt sowie nämliches in der Kavität eingeschlossene Fluidvolumen im Zusammenspiel zudem auch als ein allfällige Druckstöße dämpfendes Tiefpaß bzw. quais als ein Druckstöße absorbierender Helmholtz-Resonator.

Ein Vorteil der Erfindung besteht u.a. darin, daß damit nicht nur auf sehr einfache gleichwohl sehr effektive Weise eine erhebliche Verringerung der Empfindlichkeit auf Druckstöße bzw. Temperaturschwankungen von Sensoren der in Rede stehenden Art erzielt werden kann, sondern daß dies zudem auch erreicht werden kann, ohne dadurch die Meßempfindlichkeit, nämlich die Empfindlichkeit des Sensors auf die eigentlich zu erfassenden Druckschwankungen nennenswert zu verringern oder gar auf ein für die - nicht zuletzt auch in industriellen Anwendung - typischerweise geforderte hohe Meßgenauigkeit untaugliches Maß abzusenken. Ein weiterer Vorteil der Erfindung ist zudem auch darin zu sehen, daß die erfindungsgemäße Sensorbaugruppe im übrigen prinzipiell gleich aufgebaut sein kann, wie bekannte Sensorbaugruppen konventioneller Sensoren bzw. damit gebildeter Meßsysteme. Darüberhinaus können der Verformungskörper und die Sensorfahne der erfindungsgemäßen Sensorbaugruppe auch prinzipiell den gleichen Aufbau aufweisen bzw. aus den gleichen Materialien gefertigt werden, wie konventionelle Verformungskörper bzw. Sensorfahnen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen. Im einzelnen zeigen:
- Fig. 1, 2: schematisch in verschieden Ansichten ein - hier als Wirbel-Durchflußmeßgerät ausgebildetes - Meßsystem mit einem Sensor und einer Meß-Elektronik zum Messen wenigstens eines Strömungsparameters eines in einer Rohrleitung strömenden Fluids;
- Fig. 3a, 3b, 3c, 3d: schematisch, teilweise auch geschnittenen Ansichten einer Sensorbaugruppe für einen, insb. für die Verwendung in einem Meßsystem gemäß der Fig. 1 bzw. 2 geeigneten, Sensor.

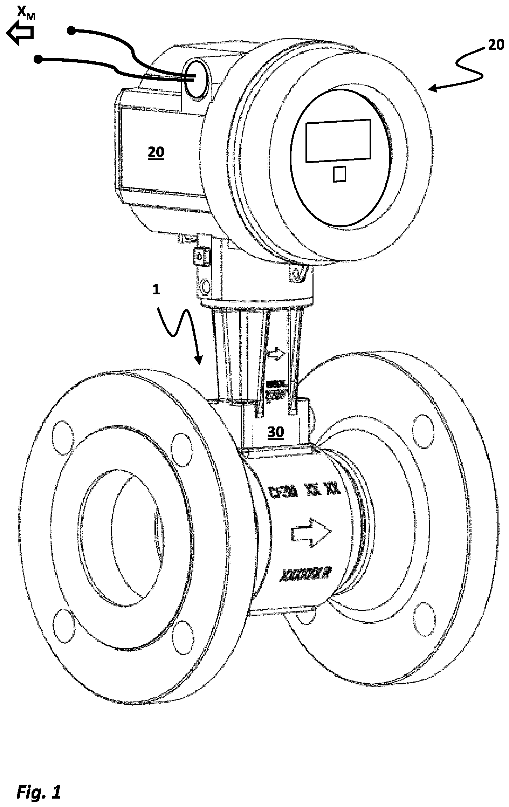

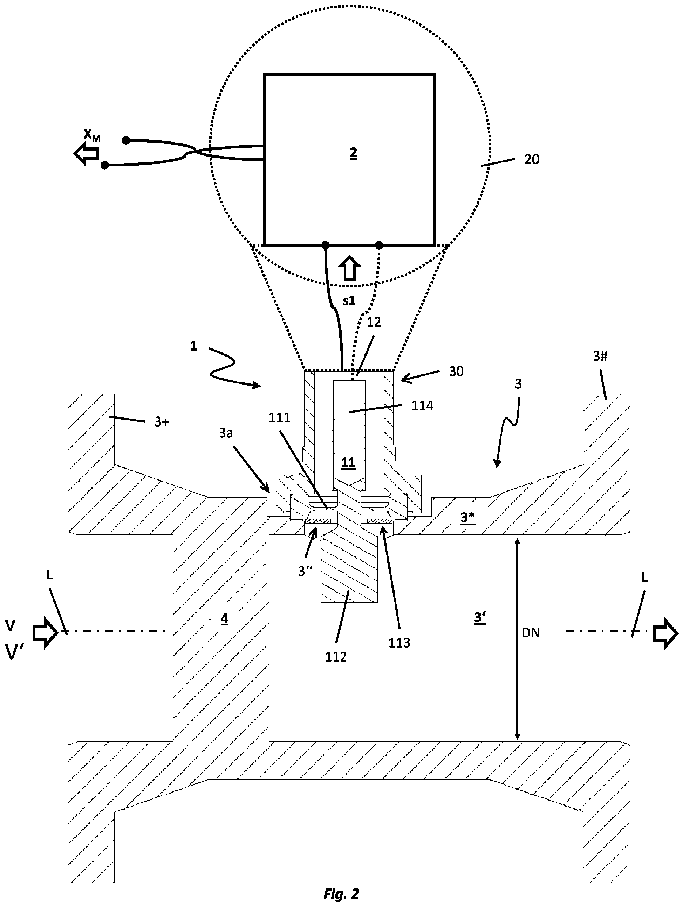

In Fig. 1 und 2 ist ein Ausführungsbeispiel für ein Meßsystem zum Messen wenigstens eines, ggf. auch zeitlich veränderlichen Strömungsparameters, wie z.B. einer Strömungsgeschwindigkeit v und/oder einer Volumendurchflußrate V', eines in einer Rohrleitung strömenden Fluids, beispielsweise eines heißen, insb. zumindest zeitweise eine Temperatur von mehr als 400°C aufweisenden, und/oder zumindest zeitweise unter einem hohen Druck, insb. von mehr als 140 bar, stehenden Gases, gezeigt. Die Rohrleitung kann beispielsweise als Anlagenkomponente eines Wärmeversorgungsnetzes oder eines Turbinenkreislaufes ausgebildet, mithin kann das Fluid beispielsweise Dampf, insb. auch gesättigter Dampf oder überhitzter Dampf, oder beispielsweise auch ein aus einer Dampfleitung abgeführtes Kondensat sein. Fluid kann aber beispielsweise auch ein (komprimiertes) Erd- oder ein Biogas sein, mithin kann die Rohrleitung beispielsweise auch Komponente einer Erd- oder einer Biogasanlage oder einer Gasversorgungsnetzes sein.

Das Meßsystem weist einen Sensor 1 auf, der dafür vorgesehen bzw. ausgestaltet ist, Druckschwankungen im in einer Hauptströmungsrichtung am Sensor vorbei strömenden Fluid zu erfassen und in ein mit nämlichen Druckschwankungen korrespondierendes, beispielsweise elektrisches oder optisches, Sensorsignal s1 zu wandeln. Wie aus der Zusammenschau der Fig. 1 und 2 ersichtlich, umfaßt das Meßsystem desweiteren, eine - beispielsweise in einem druck- und/oder schlagfesten Schutzgehäuse 20 untergebrachte - Meß-Elektronik 2, die an den Sensor 1 angeschlossen ist bzw. im Betrieb des Meßsystems mit dem Sensor 1 kommuniziert. Die Meß-Elektronik 2 ist im besonderen dafür eingerichtet, das Sensorsignal s1 zu empfangen und zu verarbeiten, beispielsweise nämlich den wenigstens einen Strömungsparameters, beispielsweise also die Strömungsgeschwindigkeit v bzw. die Volumendurchflußrate V', repräsentierende Meßwerte X_{M} zu generieren. Die Meßwerte X_{M} können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden. Das Schutzgehäuse 20 für die Meß-Elektronik 2 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein.

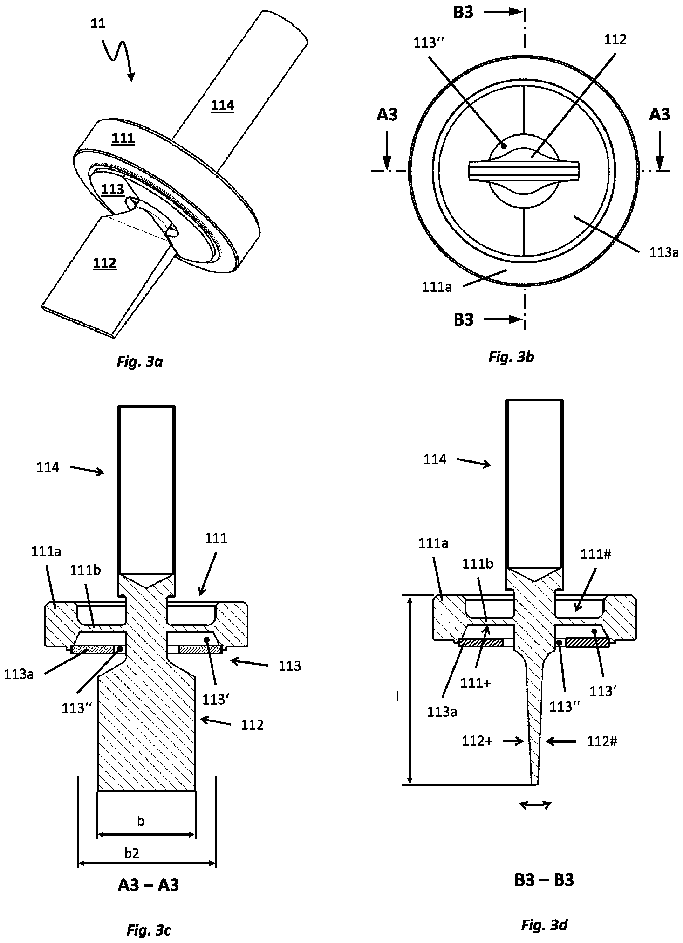

Der Sensor 1 umfaßt, wie auch in Fig. 2 und den Fig. 3a, 3b, 3c, 3d jeweils dargestellt bzw. aus einer Zusammenschau nämlicher Figuren ohne weiteres ersichtlich, eine Sensorbaugruppe 11, die mittels eines, insb. membranartigen bzw. scheibenförmigen, Verformungskörpers 111 sowie einer eine linksseitige erstes Seitenfläche 112+ sowie eine rechtsseitige zweite Seitenfläche 112# aufweisenden Sensorfahne 112 gebildet ist, die sich ausgehend von einer ersten Oberfläche 111 + des Verformungskörpers 111 bis zu einem distalen, nämlich vom Verformungskörper 111 bzw. dessen Oberfläche 111+ entfernten (freien) Ende erstreckt. Der Verformungskörper 111 weist ferner eine der ersten Oberfläche 111+ gegenüberliegende, beispielsweise zur ersten Oberfläche 111+ zumindest teilweise parallele, zweite Oberfläche 111# sowie ein, beispielsweise kreisringförmiges und/oder mit einer Dichtfläche versehenes, äußeres Randsegment 111a auf. Das äußere Randsegment 111a hat eine Dicke, die - wie in den Fig. 2 bzw. 3a, 3b, 3c, 3d angedeutet - im Vergleich zu einer minimalen Dicke eines von nämlichem Randsegment 111a eingeschlossen inneren - hier nämlich die Sensorfahne 112 tragenden - Segment 111b wesentlich größer ist.

Verformungskörper 111 und Sensorfahne 112 der erfindungsgemäßen Sensorbaugruppe 11 sind im besonderen dafür eingerichtet, zu - typischerweise erzwungenen - Schwingungen um eine gemeinsame statischen Ruhelage angeregt zu werden, derart, daß die Sensorfahne 112 den Verformungskörper 111 elastisch verformende Pendelbewegungen in einer - im wesentlichen quer zur vorbezeichneten Hauptströmungsrichtung verlaufenden - Detektionsrichtung ausführt. Die Sensorfahne 112 weist dementsprechend eine Breite b, gemessen als eine maximale Erstreckung in Richtung der Hauptströmungsrichtung, auf die wesentlich größer ist, als eine Dicke d der Sensorfahne 112, gemessen als eine maximale seitlich Erstreckung in Richtung der Detektionsrichtung. Im in den Fig. 3a, 3b, 3c, 3d dargestellten Ausführungsbeispiel ist die Sensorfahne 112 zudem im wesentlichen keilförmig ausgebildet; sie kann aber beispielsweise auch, wie bei derartigen Sensorbaugruppen bzw. damit gebildeten Sensoren durchaus üblich, als eine relativ dünne, ebene Platte ausgebildet sein.

Verformungskörper 111 und Sensorfahne 112 können desweiteren beispielsweise Bestandteile ein und desselben monolithischen Formteils sein, das beispielsweise gegossen oder durch ein generatives Verfahren, wie etwa 3D-Laserschmelzen, hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 111 kann - wie bei derartigen Sensorbaugruppen durchaus üblich - zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne zumindest anteilig aus einem Metall, beispielsweisenämlich einem Edelstahl bzw. einer Nickelbasislegierung, bestehen; insbesondere können der Verformungskörper 111 und die Sensorfahne 112 auch aus dem gleichen Material hergestellt werden.

Neben der Sensorbaugruppe 11 umfaßt der Sensor desweiteren ein - beispielsweise als piezoelektrischer Wandler, als Komponente eines Kondensators ausgebildetes, kapazitives oder beispielsweise auch als Komponente eines Fotodetektor ausgebildetes, optisches - Wandlerelement 12 zum Generieren eines zeitlich ändernde - typischerweise nämlich zumindest zeitweise periodische - Bewegungen der Sensorfahne bzw. gleichermaßen zeitlich ändernde Verformungen des Verformungskörpers 111 repräsentierenden, hier auch als Sensorsignal dienenden Signals, beispielsweise eine durch die vorbezeichneten Bewegungen modulierte veränderliche elektrische Spannung oder entsprechend moduliertes Laserlicht.

Nach einer weiteren Ausgestaltung der Erfindung umfaßt das Meßsystem ferner ein in der Verlauf der vorbezeichneten Rohrleitung einsetzbares Rohr 3 mit einem von einer - beispielsweise metallischen - Wandung 3* des Rohrs umhüllten Lumen 3', das sich von einem Einlaßende 3+ bis zu einem Auslaßende 3# erstreckt und das dafür eingerichtet ist, das in der Rohrleitung strömende Fluid zu führen. Der Sensor 1 ist zudem in nämliches Rohr eingesetzt, derart, daß die erste Oberfläche des Verformungskörpers 111 dem Lumen 3' des Rohrs zugewandt ist, mithin die Sensorfahne in nämliches Lumen hineinragt. Im hier gezeigten Ausführungsbeispiel ist am Einlaßende 3+ wie auch am Auslaßende 3# ferner jeweils ein dem Herstellen einer leckfreien Flanschverbindung mit jeweils einem korrespondierenden Flansch an einem ein- bzw. auslaßseitig Leitunsgsegment der Rohrleitung dienender Flansch vorgesehen. Desweiteren kann das Rohr 3, wie in Fig. 1 oder 2 dargestellt, im wesentlichen gerade, beispielsweise nämlich als Hohlzylinder mit kreisförmigem Querschnitt ausgebildet sein, derart, daß das Rohr 3 eine das Einlaßende 3+ und das Auslaßende 3# imaginär verbindende gedachte gerade Längsachse L aufweist. Der Sensor 1 ist im in Fig. 1 bzw. 2 gezeigten Ausführungsbeispiel von außen durch eine in der Wandung eingeformte Öffnung 3" hindurch in das Lumen des Rohrs eingeführt und im Bereich nämlicher Öffnung - beispielsweise auch wieder lösbar - von außen an der Wandung 3* fixiert, und zwar so, daß die Oberfläche 111+ des Verformungskörpers 111 dem Lumen 3' des Rohrs 3 zugewandt ist, mithin die Sensorfahne 112 in nämliches Lumen hineinragt. Insbesondere ist der Sensor 1 so in die Öffnung 3"eingesetzt, daß der Verformungskörper 111 die Öffnung 3" überdeckt bzw. hermetisch verschließt. Nämliche Öffnung kann beispielsweise so ausgebildet sein, daß sie- wie bei Meßsystemen der in Rede stehenden Art durchaus üblich - einen (Innen-)Durchmesser aufweist, der in einem Bereich zwischen 10 mm und ca. 50 mm liegt.

Nach einer weiteren Ausgestaltung der Erfindung ist in der der Öffnung 3" eine dem Haltern des Verformungskörpers an der Wandung 3* dienende Fassung 3a ausgebildet. Der Sensor 1 kann hierbei beispielsweise durch stoffschlüssiges Verbinden, insb. nämlich durch Verschweißen oder Verlöten, von Verformungskörper 111 und Wandung 3* am Rohr 3 fixiert sein; er kann aber beispielsweise auch mit dem Rohr 3 lösbar verbundenen, beispielsweise nämlich ver- bzw. angeschraubt sein. In der der Fassung 3a kann ferner wenigstens eine, beispielsweise auch umlaufende bzw. kreisringartige, Dichtfläche ausgebildet sein, die dafür eingerichtet ist, im Zusammenspiel mit dem Verformungskörper 111 und einem ggf. vorgesehenen, beispielsweise ringförmige oder ringscheibenförmige, Dichtelement die Öffnung 3" entsprechend abzudichten. Nicht zuletzt für den Fall, daß die Sensorbaugruppe in die vorbezeichnete Fassung 3a eingesetzt und lösbar mit dem Rohr 3 verbunden werden soll, kann auch das Randsegment 111a des Verformungskörpers 111 in vorteilhafter Weise ferner mit einer, beispielsweise auch mit der in der Öffnung 3" ggf. vorgesehenen Dichtfläche korrespondierenden und/oder kreisringartigen, Dichtfläche versehen sein.

Im hier gezeigten Ausführungsbeispiel ist das Meßsystem speziell als ein Wirbel-Durchflußmeßgrät mit einem im Lumen des Rohrs 3 - hier nämlich stromaufwärts des Sensors 1 - angeordneten, dem Bewirken einer *Kármánsche* Wirbelstrasse im strömenden Fluid dienenden Stauköper 4 ausgebildet. Sensor und Staukörper sind hierbei im besonderen so dimensioniert und angeordnet, daß die Sensorfahne 112 in einem solchen Bereich in das Lumen 3* des Rohrs bzw. das darin geführte Fluid hineinragt, der im Betrieb des Meßsystems regelmäßig von einer (stationär ausgebildeten) *Kármánschen* Wirbelstrasse eingenommen wird, so daß die mittels des Sensors 1 erfaßten Druckschwankungen durch am Staukörper 4 mit einer Ablöserate (∼ 1/f_{Vtx}) abgelöste Wirbel verursachte periodische Druckschwankungen sind und das Sensorsignal s1 eine mit der Ablöserate nämlicher Wirbel korrespondierende Signalfrequenz (∼ f_{Vtx}) aufweist. Im hier gezeigten Ausführungsbeispiel ist das Wirbel-Durchflußmeßgrät zudem als ein Meßsystem in Kompaktbauweise ausgebildet, bei dem die Meß-Elektronik 2 in einem - beispielsweise mittels eines halsförmigen Anschlußstutzen 30 - am Rohr gehalterten Schutzgehäuse 20 untergebracht ist.

Nach einer weiteren Ausgestaltung der Erfindung sind der Sensor 1 und das Rohr 3 ferner so dimensioniert, daß eine Länge I der Sensorfahne 112, gemessen als minimaler Abstand zwischen einem proximalen, nämlich an den Verformungskörper 111 grenzenden Ende der Sensorfahne 112 bis zum distalen Ende der Sensorfahne 112 mehr als einer Hälfte eines Kalibers DN des Rohrs 3 bzw. weniger als 95% nämlichen Kalibers DN entspricht. Die Länge I kann beispielsweise - wie bei vergleichsweise kleinem Kaliber von weniger als 50 mm durchaus üblich - auch so gewählt sein, daß nämliches distales Ende der Sensorfahne 112 nur noch einen sehr geringen minimalen Abstand zur Wandung 3* des Rohrs 3 aufweist. Bei Rohren mit vergleichsweise großem Kaliber von 50 mm oder mehr kann die Sensorfahne 112 - wie bei Meßsystemen der in Rede stehenden Art durchaus üblich bzw. wie auch aus der Fig. 2 ersichtlich - beispielsweise auch deutlich kürzer ausgebildet sein, als eine Hälfte eines Kalibers des Rohrs 3.

Wie bereits erwähnt, ist die Sensorbaugruppe, mithin der damit gebildete Sensor bzw. das damit gebildete Meßsystem im besonderen auch dafür vorgesehen, in solchen Meßstellen eingesetzt zu werden, bei denen im zu messende Fluid, beispielsweise aufgrund von kondensationsinduzierten Wasserschlägen (CIWH), kurzeitig extrem hohe hydrostatische, nämlich auf senkrecht gegen die Wandung 3* des Rohrs wirkende, mithin gleichermaßen gegen die Sensorbaugruppe wirkende Drücke von weit über 100 bar auftreten können, beispielsweise nämlich in Heißdampfanwendungen mit Fluidtemperaturen von über 400°C. Darüberhinaus ist die Sensorbaugruppe besonders auch für solche Meßstellen vorgesehen, bei denen das zu messende Fluid sehr inhomogene Temperaturverteilungen aufweisen kann, derart daß die jeweilige Sensorbaugruppe im Ergebnis extremen zeitlichen Temperaturschwankungen ausgesetzt ist.

Zur Erzielung einer möglichst geringen Empfindlichkeit des Sensors auf Druckstöße und/oder Temperaturschwankungen der vorgenannten Art bzw. zur Verringerung von aus solchen hohen Belastungen des Sensors resultierenden Meßfehlern bei der Messung des wenigstens einen Strömungsparameters mit dem mit nämlichem Sensor gebildeten Meßsystems umfaßt die erfindungsgemäße Sensorbaugruppe 1, wie auch in den Fig. 1, 2, 3c, 3d, jeweils schematisch dargestellt, ferner eine Schutzvorrichtung 113 zum Schutz des Verformungskörpers 111 vor Druckstößen gegen dessen - bei dem in Fig. 1 gezeigten Ausführungsbeispiel dem Lumen des Rohrs 3 zugewandten - ersten Oberfläche 111+ und/oder zum Schutz des Verformungskörpers 111 vor sprunghaften Änderungen einer Temperatur an nämlicher Oberfläche 111+. Die Schutzvorrichtung 113 weist wenigstens eine an das Randsegment 111a des Verformungskörpers 111 angrenzende Platte 113a auf, die sich radial einwärts in Richtung der Sensorfahne erstreckt, und zwar so, daß zwischen Platte 113a und Verformungskörper eine, beispielsweise im wesentlichen ringförmige bzw. ringscheibenförmige, Kavität 113' gebildet ist, die einen an die Oberfläche 111+ des Verformungskörpers 111 angrenzenden, gleichwohl vom distalen Ende der Sensorfahne entfernten Bereich der Sensorfahne aufnimmt, und so, daß zwischen Platte und Sensorfahne ein, beispielsweise im wesentlichen ringförmiger, Spalt 113" gebildet ist. Wie in den Fig. 1, 2, 3c, 3d, jeweils gezeigt bzw. wie aus einer Zusammenschau nämlicher Figuren ohne weiteres ersichtlich ist die Platte 113a der Schutzvorrichtung 113 zumindest bei in einer gemeinsamen statischen Ruhelage befindlichen Verformungskörper 111 und Sensorfahne 112 sowohl vom Verformungskörper 111 als auch von der Sensorfahne 112 beabstandet bzw. so ausgebildet und angeordnet, daß sie weder den in nämlicher statischen Ruhelage befindlichen Verformungskörper 111 noch die in nämlicher statischen Ruhelage befindlichen Sensorfahne 112 kontaktiert. Die Kavität 113' mündet in den nach außen - bei der in Fig. 1 gezeigten Einbausituation nämlich zum Lumen des Rohrs - hin offenen Spalt 113", derart, daß die Kavität im Betrieb des mittels der Sensorbaugruppe gebildeten Meßsystems bzw. bei der in Fig. 1 gezeigten Einbausituation via Spalt mit dem Lumen des Rohrs kommuniziert bzw. daß die Kavität via Spalt von einem Teilvolumen des Fluids gefüllt wird, mithin im Betrieb des Meßsystems ein Teilvolumen des Fluids aufnimmt, bzw. derart, daß die in das Lumen hineinragende Sensorfahne 112 (lediglich) an einem sich zwischen deren distalen Ende und der Platte erstreckenden Bereich vom zu messenden Fluid umströmt wird. Nach einer weiteren Ausgestaltung der Erfindung ist vorgesehen, daß nämlicher Spalt 113" die einzige Fluidverbindung der Kavität 113' nach außen, mithin zum Lumen des Rohrs 3 bildet, derart daß die Kavität 113' lediglich via Spalt 113" mit dem Lumen 3' des Rohrs kommuniziert bzw. im Betrieb lediglich via Spalt mit im Lumen des Rohrs geführtem Fluid befüllt werden kann. Nach einer weiteren Ausgestaltung der Erfindung sind der Verformungskörper 111, die Sensorfahne und die Schutzvorrichtung bzw. deren Platte so bemessen und so angeordnet, daß bei gemeinsam mit dem Verformungskörper 111 in gemeinsamer statischer Ruhelage befindlicher Sensorfahne 112 letztere die Platte 113a der Schutzvorrichtung 113 nicht kontaktiert; dies im besonderen auch derart, daß die Sensorfahne 112 bei Ausführen von innerhalb einer Spezifikation der Sensorbaugruppe bzw. des damit gebildeten Sensors liegenden Pendelbewegungen nämliche Platte 113a nicht kontaktiert.

Durch die Verwendung der erfindungsgemäßen Schutzvorrichtung 113 ist der Verformungskörper 111 einerseits mittels der davon beabstandeten, vorgelagerten Platte 113a gegen das im Betrieb vorbeiströmende Fluid abgeschirmt, mithin ist der Verformungskörper 111 im Betrieb zumeist nicht von strömendem, sondern lediglich von im wesentlichen ruhendem bzw. von innerhalb der Kavität 113' ggf. zirkulierendem Fluid kontaktiert. Zudem wirken anderseits das in der Kavität 113' eingeschlossene Fluidvolumen sowie die Platte 113a im Zusammenspiel als ein allfällige Temperaturschwankungen dämpfendes thermisches Tiefpaß bzw. wirken der Verformungskörper 111, der Spalt 113" sowie nämliches in der Kavität 113' eingeschlossene Fluidvolumen im Zusammenspiel zudem auch als ein allfällige Druckstöße dämpfendes Tiefpaß. Darüberhinaus können der Verformungskörper 111 und der Schutzvorrichtung 113 zusammen mit dem in der Kavität 113' und im Spalt 113" befindlichen Fluidvolumen auch einen sogenannten Helmholtz-Resonator bilden, von dem eine Eigenfrequenz durch eine Masse und Elastizität nämlichen Fluidvolumens sowie durch Form und Größe der Kavität 113' und des Spaltes 113" bestimmt ist. Nämlicher Helmholtz-Resonator ist beispielsweise in der Lage, mit den Druckstößen eingetragene (Schall-)Energie in kinetische Energie des vorbezeichneten eingeschlossenen Fluidvolumens zu wandeln, derart, daß im Ergebnis durch Druckstöße eingetragene Energie zumindest teilweise auch durch Schwingungen des in der Kavität 113' und im Spalt 113" befindlichen Fluidvolumens absorbiert, mithin vom Verformungskörper 111 ferngehalten wird.

Um sicherzustellen, daß zum einen die (gemeinsam mit dem Verformungskörper) in statischer Ruhelage befindliche Sensorfahne tatsächlich die Platte der Schutzvorrichtung nicht kontaktiert, gleichwohl ein ausreichend hoher Fließwiderstandes gegen in Richtung der Kavität strömendes Fluid bereitgestellt ist und daß zum anderen die den Verformungskörper 111 elastisch verformende Pendelbewegungen der Sensorfahne 112 eine für die Erfassung der Druckschwankungen bzw. für die Ermittlung einer Ablöserate von periodische Druckschwankungen verursachenden Wirbeln dennoch ausreichende maximale Auslenkung aufweisen können, sind der Verformungskörper, die Sensorfahne und die Schutzvorrichtung nach einer weiteren Ausgestaltung der Erfindung so bemessen und angeordnet, daß der Spalt 113" bei gemeinsam mit dem Verformungskörper in gemeinsamer statischer Ruhelage befindlicher Sensorfahne eine minimale Spaltbreite aufweist, die größer als 0,02 mm und/oder kleiner als 0,5 mm ist, und/oder daß der Spalt bei gemeinsam mit dem Verformungskörper in gemeinsamer statischer Ruhelage befindlicher Sensorfahne eine maximale Spaltbreite aufweist, die kleiner als 0,5 mm und/oder größer als 0,02 mm ist. Indem der Spalt eine Spaltbreite von wenigstens 0,02 mm aufweist kann - neben dem Sicherstellen der vorbezeichneten, für die Messungen ausreichend großen Amplitude der dem Erfassen von Druckschwankungen dienlichen Pendelbewegungen der Sensorfahne - zudem auch ein ausreichend rasches initiales Befüllen mit zu messendem Fluid der zunächst nicht mit dem zu messenden Fluid befüllten Kavität erreicht werden.

Die Platte 113a kann beispielsweise zumindest anteilig, insb. aber auch überwiegend oder vollständig, aus einem Metall, wie etwa einem Edelstahl bzw. einer Nickelbasislegierung, bestehen. Zudem kann es auch von Vorteil sein, Verformungskörper 111 und Platte 113a, ggf. auch die Sensorfahne aus gleichem Material herzustellen. Desweiteren können der Verformungskörper sowie die Platte der Schutzvorrichtung beispielsweise auch integrale Bestandteile ein und desselben monolithischen Formteils sein, beispielsweise auch derart, daß Verformungskörper, Sensorfahne und Platte mittels eines einzigen monolithischen Formteils gebildet sind. Nämliches monolithisches Formteil kann beispielsweise ein gegossenes oder durch ein generatives Verfahren, wie
z.B. 3D-Laserschmelzen, hergestelltes Formteil, insb. aus einem Metall, sein. Der Verformungskörper 111 und die Platte 113a der Schutzvorrichtung können aber beispielsweise auch aneinander gefügt, nämlich stoffschlüssig miteinander verbunden, insb. nämlich miteinander verschweißt bzw. verlötet, sein. Nach einer weiteren Ausgestaltung der Erfindung ist vorgesehen, daß die Platte 113a der Schutzvorrichtung, nicht zuletzt zwecks Vereinfachung der Fertigung der Schutzvorrichtung, mittels wenigstens zweier bzw. mittels genau zweier Plattensegmenten gebildet ist, beispielsweise nämlich, derart, daß nämliche Plattensegmente - wie auch in Fig. 3a und 3b jeweils angedeutet bzw. aus deren Zusammenschau ohne weiteres ersichtlich - unter Bildung von jeweils in den Ringspalt übergehenden bzw. daran angrenzenden Stoßkanten einander gegenüberliegen. Die Plattensegmente können zudem baugleich bzw. gleichgroß sein. Falls erforderlich, etwa aus Gründen der mechanischen Stabilität der mittels der Plattensegmente schlußendlich gebildeten Platte 113a und/oder aus Gründen einer möglichst klein zu haltenden Größe des schlußendlich gebildeten Spaltes 113", können die wenigstens zwei Plattensegmente ferner auch abschnittsweise stoffschlüssig miteinander verbunden sein, etwa in der Weise, daß nämliche Plattensegmente an einander gegenüberliegenden bzw. einander berührenden Stoßkanten miteinander verschweiß oder verlötet sind.

Zum Kompensieren von aus allfälligen Bewegungen der Sensorbaugruppe - etwa infolge von Vibration der vorbezeichneten, an das Rohr angeschlossenen Rohrleitung - resultierenden Kräften und/oder Momenten bzw. zum Vermeiden von daraus resultierenden unerwünschten, nämlich das Sensorsignal s1 verfälschenden Bewegungen der Sensorfahne bzw. des Verformungskörpers 111 weist die Sensorbaugruppe 11 nach einer weiteren Ausgestaltung der Erfindung ferner einen sich ausgehend von der zweiten Oberfläche 111# des Verformungskörpers 111 erstreckenden, beispielsweise stab-, platten- oder hülsenförmigen, Ausgleichskörper 114 auf. Nämlicher Ausgleichskörper 114 kann zudem auch als eine Halterung des Wandlerelements 12 dienen oder auch als ein Bestandteil des Wandlerelements 12 dienen, beispielsweise als eine bewegliche Elektrode eines nämliches (kapazitives) Wandlerelement bildenden Kondensators. Der Ausgleichskörper 114 kann beispielsweise aus dem gleichen Material bestehen, wie der Verformungskörper und/oder wie die Sensorfahne, beispielsweise einem Metall. Beispielsweise kann der Ausgleichskörper 114 nämlich aus einem Edelstahl bzw. einer Nickelbasislegierung hergestellt sein. Nach einer weiteren Ausgestaltung der Erfindung sind Verformungskörper 111 und Ausgleichskörper 114 stoffschlüssig miteinander verbunden, beispielsweise miteinander verschweißt bzw. verlötet, mithin ist vorgesehen, Ausgleichskörper 114 und Verformungskörper 111 aus entsprechend stoffschlüssig miteinander verbindbaren Materialien herzustellen. Alternativ können Verformungskörper 111 und Ausgleichskörper 114 aber auch Bestandteile ein und desselben monolithischen Formteils sein, beispielsweise auch derart, daß Sensorfahne 111, Verformungskörper 112 und Ausgleichskörper 114 Bestandteile nämlichen Formteils sind. Sensorfahne 112 und Ausgleichskörper 114 können desweiteren - wie auch aus einer Zusammenschau der Fig. 3c und 3d ersichtlich - zueinander fluchtend angeordnet sein, derart, daß eine Trägheitshauptachse der Sensorfahne 112 in Verlängerung mit einer Trägheitshauptachse des Ausgleichskörpers 114 koinzidiert. Alternativ oder in Ergänzung können der Ausgleichskörper 114 und der Verformungskörper 111 zudem so positioniert und zueinander ausgerichtet sein, daß eine Trägheitshauptachse des Verformungskörpers 111 in Verlängerung mit einer Trägheitshauptachse des Ausgleichskörpers 114 koinzidiert. Darüberhinaus können Sensorfahne 112,
Ausgleichskörper 114 und Verformungskörper 111 auch so positioniert und zueinander ausgerichtet sein, daß - wie beispielsweise auch aus einer Zusammenschau der Fig. 2, 3a, 3b, 3c und 3d ersichtlich - eine Trägheitshauptachse der Sensorbaugruppe 11 sowohl zu einer Trägheitshauptachse der Sensorfahne 112 als auch einer Trägheitshauptachse des Ausgleichskörpers 114 wie auch einer Trägheitshauptachse des Verformungskörpers 111 parallel verläuft oder sowohl mit nämlicher Trägheitshauptachse der Sensorfahne als auch mit nämlicher Trägheitshauptachse Ausgleichskörpers wie auch mit nämlicher Trägheitshauptachse des Verformungskörpers koinzidiert.

## Patentansprüche

1. Sensorbaugruppe für einen Sensor, welche Sensorbaugruppe umfaßt:
- einen, insb. membranartigen und/oder scheibenförmigen, Verformungskörper (111) mit einer ersten Oberfläche (111+), einer gegenüberliegenden, insb. zur ersten Oberfläche (111+) zumindest teilweise parallelen, zweiten Oberfläche (111#) und einem, insb. kreisringförmigen und/oder mit einer Dichtfläche versehenen, äußeren Randsegment (111a);
- eine sich ausgehend von der ersten Oberfläche (111+) des Verformungskörpers bis zu einem distalen Ende erstreckende, insb. plattenförmige oder keilförmige, Sensorfahne (112);
- **gekennzeichnet durch** eine Schutzvorrichtung (113) zum Schutz des Verformungskörpers (111) vor Druckstößen gegen dessen erste Oberfläche und/oder zum Schutz des Verformungskörpers (111) vor sprunghaften Änderungen einer Temperatur an dessen erster Oberfläche,
- wobei die Schutzvorrichtung (113) wenigstens eine an das Randsegment (111a) des Verformungskörpers (111) angrenzende Platte (113a) aufweist, die sich radial einwärts in Richtung der Sensorfahne erstreckt derart,
-- daß zwischen Platte und Verformungskörper eine, insb. ringförmige bzw. ringscheibenförmige, Kavität (113') gebildet ist, die einen an die erste Oberfläche (111+) des Verformungskörpers (111) angrenzenden, gleichwohl vom distalen Ende der Sensorfahne entfernten Bereich der Sensorfahne aufnimmt,
-- und daß zwischen Platte (113a) und Sensorfahne (112) ein, insb. ringförmiger, Spalt (113") gebildet ist.

2. Sensorbaugruppe nach einem der vorherigen Ansprüche, wobei die Sensorfahne (112) dafür eingerichtet ist, in ein Fluid eingetaucht bzw. an einem sich zwischen deren distalen Ende und der Platte erstreckenden Bereich von einem Fluid umströmt zu werden.

3. Sensorbaugruppe nach dem vorherigen Anspruch, wobei die Kavität dafür eingerichtet ist, ein Teilvolumen des Fluids aufzunehmen bzw. via Spalt, insb. nämlich lediglich via Spalt, von einem Teilvolumen des Fluids gefüllt zu werden.

4. Sensorbaugruppe nach einem der vorherigen Ansprüche, wobei die Sensorfahne (112) dafür eingerichtet ist, in ein Lumen eines ein strömendes Fluid führenden Rohrs eingesetzt bzw. an einem sich zwischen deren distalen Ende und der Platte erstreckenden Bereich von einem im Lumen nämlichen Rohres geführten Fluid umströmt zu werden.

5. Sensorbaugruppe nach dem vorherigen Anspruch, wobei die Kavität dafür eingerichtet ist, via Spalt, insb. nämlich lediglich via Spalt, mit dem Lumen des Rohrs zu kommunizieren.

6. Sensorbaugruppe nach einem der vorherigen Ansprüche, wobei die Platte mittels, insb. genau, zweier, insb. baugleichen bzw. gleichgroßen, Plattensegmenten gebildet ist, insb. derart, daß die beiden Plattensegmente unter Bildung von jeweils in den Ringspalt übergehenden Stoßkanten einander gegenüberliegen.

7. Sensorbaugruppe nach dem vorherigen Anspruch, wobei die zwei Plattensegmente zumindest abschnittsweise stoffschlüssig miteinander verbunden sind, insb. derart, daß die beiden Plattensegmente an einander gegenüberliegenden Stoßkanten miteinander verschweiß oder verlötet sind.

8. Sensorbaugruppe nach einem der vorherigen Ansprüche,
- wobei der Verformungskörper (111) und die Sensorfahne (112) dafür eingerichtet sind, zu, insb. erzwungenen, Schwingungen um eine gemeinsame statische Ruhelage angeregt und dabei relativ zur Schutzvorrichtung (113) bewegt zu werden, derart, daß die Sensorfahne den Verformungskörper elastisch verformende Pendelbewegungen ausführt; und/oder
- wobei Verformungskörper, Sensorfahne und Schutzvorrichtung so bemessen und angeordnet sind, daß bei gemeinsam mit dem Verformungskörper in gemeinsamer statischer Ruhelage befindlicher Sensorfahne diese die Platte der Schutzvorrichtung nicht kontaktiert; und/oder
- wobei Verformungskörper, Sensorfahne und Schutzvorrichtung, insb. nämlich die Platte der Schutzvorrichtung, so bemessen und angeordnet sind, daß der Spalt bei gemeinsam mit dem Verformungskörper in gemeinsamer statischer Ruhelage befindlicher Sensorfahne eine minimale Spaltbreite aufweist, die größer als 0,02 mm und/oder kleiner als 0,5 mm ist; und/oder
- wobei Verformungskörper, Sensorfahne und Schutzvorrichtung, insb. nämlich die Platte der Schutzvorrichtung, so bemessen und angeordnet sind, daß der Spalt bei gemeinsam mit dem Verformungskörper in gemeinsamer statischer Ruhelage befindlicher Sensorfahne eine maximale Spaltbreite aufweist, die kleiner als 0,5 mm und/oder größer als 0,02 mm ist.

9. Sensor zum Erfassen von Druckschwankungen in einem strömenden Fluid, insb. zum Erfassen von Druckschwankungen in einer im strömenden Fluid ausgebildeten Kärmänschen Wirbelstrasse, welcher Sensor umfaßt:
- eine Sensorbaugruppe (11) gemäß einem der vorherigen Ansprüche;
- sowie ein Wandlerelement (12) zum Generieren eines zeitlich ändernde, insb. zumindest zeitweise periodische, Bewegungen der Sensorfahne und/oder zeitlich ändernde, insb. zumindest zeitweise periodische, Verformungen des Verformungskörper (111) repräsentierenden, insb. elektrischen oder optischen, Sensorsignals.

10. Meßsystem zum Messen wenigstens eines, insb. zeitlich veränderlichen, Strömungsparameters, insb. einer Strömungsgeschwindigkeit und/oder einer Volumendurchflußrate, eines in einer Rohrleitung strömenden Fluids, welches Meßsystem umfaßt:
- zum Erfassen von Druckschwankungen im strömenden Fluid, insb. nämlich zum Erfassen von Druckschwankungen in einer im strömenden Fluid ausgebildeten *Kármánschen* Wirbelstrasse, einen Sensor (1) gemäß Anspruch 9;
- sowie eine Meß-Elektronik (2), die dafür eingerichtet ist, das Sensorsignal zu empfangen und zu verarbeiten, insb. nämlich den wenigstens einen Strömungsparameter repräsentierende Meßwerte (X_{M}) zu generieren.

11. Meßsystem nach dem vorherigen Anspruch , weiters umfassend: ein in den Verlauf nämlicher Rohrleitung einsetzbares Rohr (3) mit einem Lumen (3'), das dafür eingerichtet ist, das in der Rohrleitung strömende Fluid zu führen, wobei der Sensor (1) in nämliches Rohr eingesetzt ist, derart, daß die erste Oberfläche des Verformungskörpers (111) dem Lumen (3') des Rohrs zugewandt ist und daß die Sensorfahne in nämliches Lumen hineinragt.

12. Meßsystem nach Anspruch 10, weiters umfassend: ein in den Verlauf nämlicher Rohrleitung einsetzbares Rohr (3) mit einem Lumen (3'), das dafür eingerichtet ist, das in der Rohrleitung strömende Fluid zu führen,
- wobei in der Wandung des Rohrs (3) eine, insb. eine dem Haltern des Verformungskörpers (111) an der Wandung dienende Fassung (3a) aufweisende, Öffnung (3") ausgebildet ist,
- und wobei der Sensor (1) in nämliche Öffnung (3") eingesetzt ist, derart, daß der Verformungskörper (111) die Öffnung (20') überdeckt, insb. nämlich hermetisch verschließt, und daß die erste Oberfläche des Verformungskörpers (111) dem Lumen (3') des Rohrs zugewandt ist, mithin die Sensorfahne in nämliches Lumen hineinragt.

13. Meßsystem nach einem der Ansprüche 11 bis 12, wobei die Sensorfahne (112) eine Länge, gemessen als minimaler Abstand zwischen einem proximalen, nämlich an den Verformungskörper (111) grenzenden Ende der Sensorfahne (112) bis zu einem distalen, nämlich vom Verformungskörper (111) bzw. dessen Oberfläche (111+) entfernten Ende der Sensorfahne (112) aufweist, welche Länge weniger als 95% eines Kalibers (DN) des Rohrs (3) und/oder mehr als einer Hälfte nämlichen Kalibers (DN) entspricht.

14. Meßsystem nach einem der Ansprüche 10 bis 13, weiters umfassend: einen im Lumen des Rohrs (3) angeordneten Stauköper (4), der dafür eingerichtet ist, im strömendem Fluid eine Kärmänsche Wirbelstrasse zu bewirken.

15. Verwenden eines Meßsystems nach einem der Ansprüche 10 bis 14 zum Messen eines Strömungsparameters - insb. nämlich einer Strömungsgeschwindigkeit und/oder einer Volumendurchflußrate und/oder einer Massendurchflußrate - eines in einer Rohrleitung strömenden, insb. zumindest zeitweise eine Temperatur von mehr als 400°C und/oder zumindest zeitweise mit einem Druck von mehr als 140 bar auf den Verformungskörper und/oder die Sensorfahne des Sensors wirkenden, Fluids, insb. einem Dampf.

## Claims

1. Sensor assembly for a sensor, said sensor assembly comprising:
- a deformation body (111), particularly in the form of a membrane and/or disk, with a first surface (111+), a second opposite surface (111#), particularly at least partially parallel to the first surface (111+), and an outer boundary segment (111a), particularly circular and/or provided with a sealing surface;
- a sensor lug (112), particularly in the form of a plate or wedge, extending from the first surface (111+) of the deformation body up to a distal end;
- **characterized by** a protection unit (113) designed to protect the deformation body (111) from pressure shocks against its first surface and/or to protect the deformation body (111) from abrupt changes in temperature at its first surface,
- wherein the protection unit (113) has at least one plate (113a) adjacent to the boundary segment (111a) of the deformation body (111), said plate extending radially inwards in the direction of the sensor lug in such a way that
-- a cavity (113'), particularly annular or in the shape of an annular disk, is formed between the plate and the deformation body, wherein said cavity receives a part of the sensor lug which is adjacent to the first surface (111+) of the deformation body (111) but is nevertheless at a distance from the distal end,
-- and that a gap (113'), particularly annular, is formed between the plate (113a) and the sensor lug (112).

2. Sensor assembly as claimed in the previous claim, wherein the sensor lug (112) is designed to be immersed in a fluid or to be surrounded by a fluid in an area extending between its distal end and the plate.

3. Sensor assembly as claimed in the previous claim, wherein the cavity is designed to receive a partial volume of the fluid or to be filled with a partial volume of the fluid via a gap, particularly only via a gap.

4. Sensor assembly as claimed in one of the previous claims, wherein the sensor lug (112) is designed to be inserted in an interior channel of a tube conducting a flowing fluid or to be surrounded by a fluid conducted in the interior channel of said tube, in an area extending between its distal end and the plate.

5. Sensor assembly as claimed in the previous claim, wherein the cavity is designed to communicate with the interior channel of the tube by means of a gap, particularly only via a gap.

6. Sensor assembly as claimed in one of the previous claims, wherein the plate is formed by, particularly precisely by, two plate segments, particularly identical in design or of equal size, particularly in such a way that the two plate segments are opposite one another, simultaneously forming abutting edges which extend into the annular gap.

7. Sensor assembly as claimed in the previous claim, wherein the two plate segments are at least partially interconnected in a substance-bonded manner, particularly in such a way that the two plate segments are soldered or welded together at opposing abutting edges.

8. Sensor assembly as claimed in one of the previous claims,
- wherein the deformation body (111) and the sensor lug (112) are designed to be excited to produce vibrations, particularly forced vibrations, around a common static resting position and, in this process, to be moved in relation to the protection unit (113) in such a way that the sensor lug executes oscillating movements elastically deforming the deformation body; and/or
- wherein the deformation body, the sensor lug and the protection unit are sized and arranged in such a way that, while the sensor lug is in a common static resting position with the deformation body, the sensor lug does not come into contact with the plate of the protection unit; and/or
- wherein the deformation body, the sensor lug and the protection unit, particularly the plate of the protection unit, are sized and arranged in such a way that the gap has a minimum width greater than 0.02 mm and/or less than 0.5 mm while the sensor lug is in a common static resting position with the deformation body; and/or
- wherein the deformation body, the sensor lug and the protection unit, particularly the plate of the protection unit, are sized and arranged in such a way that the gap has a maximum width that is less than 0.5 mm and/or greater than 0.02 mm while the sensor lug is in a common static resting position with the deformation body.

9. Sensor designed to measure pressure fluctuations in a flowing fluid, particularly designed to measure pressure fluctuations in a Karman vortex street formed in the flowing fluid, said sensor comprising:
- a sensor assembly (11) as claimed in one of the previous claims;
- as well as a transducer element (12) designed to generate a sensor signal, particularly electrical or optical, representing variable movements over time, particularly at least temporarily periodical, of the sensor lug and/or variable deformations over time, particularly at least temporarily periodical, of the deformation body (111).

10. Measuring system designed to measure at least one flow parameter, particularly variable over time, particularly a flow velocity and/or a volumetric flow rate, of a fluid flowing through a pipe, wherein said measuring system comprises:
- a sensor (1) as claimed in Claim 9, designed to measure pressure fluctuations in the flowing fluid, particularly designed to measure pressure fluctuations in a Karman vortex street formed in the flowing fluid;
- as well as a measuring electronics unit (2), which is designed to receive and process the sensor signal, particularly to generate measured values (X_{M}) representing the at least one flow parameter.

11. Measuring system as claimed in the previous claim, further comprising: a tube (3) which can be inserted in the course of said pipe and which has an interior channel (3') designed to conduct the fluid flowing through the pipe, the sensor (1) being inserted in said tube in such a way that the first surface of the deformation body (111) faces towards the interior channel (3') of the tube and the lug of the sensor projects into said interior channel.

12. Measuring system as claimed in Claim 10, further comprising:
a tube (3) which can be inserted in the course of said pipe and which has an interior channel (3') designed to conduct the flowing fluid through the pipe
- wherein an opening (3") is formed in the wall of the tube (3), particularly having a socket (3a) serving to hold the deformation body (111) on the wall,
- and wherein the sensor (1) is inserted in said opening (3") in such a way that the deformation body (111) covers the opening (20'), particularly seals it hermetically, and in such a way that the first surface of the deformation body (111) faces towards the interior channel (3') of the tube, i.e. the lug of the sensor projects into said interior channel.

13. Measuring system as claimed in one of the Claims 11 to 12, wherein the sensor lug (112) has a length, measured as the minimum distance between a proximal end of the sensor lug (112), particularly adjacent to the deformation body (111), and a distal end of the sensor lug (112), particularly distanced from the deformation body (111) or from its surface (111+), wherein said length corresponds to less than 95 % of a caliber (DN) of the tube (3) and/or to more than half of said caliber (DN).

14. Measuring system as claimed in one of the Claims 10 to 13, further comprising: a bluff body (4) arranged in the interior channel of the tube (3) and designed to produce a Karman vortex street in the flowing fluid.

15. Use of a measuring system as claimed in one of the Claims 10 to 14, said system being designed to measure a flow parameter - particularly a flow velocity and/or a volumetric flow rate and/or a mass flow - of a fluid, particularly of a vapor, flowing through a pipe, particularly acting on the deformation body and/or the sensor lug at least temporarily at a temperature greater than 400 °C and/or at least temporarily with a pressure greater than 140 bar.

## Revendications

1. Module capteur pour un capteur, lequel module capteur comprend :
- un corps de déformation (111), notamment en forme de membrane et/ou de disque, avec une première surface (111+), une deuxième surface opposée (111#), notamment au moins partiellement parallèle à la première surface (111+), et un segment de bord extérieur (111a), notamment circulaire et/ou pourvu d'une surface d'étanchéité ;
- une languette de capteur (112), notamment en forme de plaque ou de coin, s'étendant de la première surface (111+) du corps de déformation jusqu'à une extrémité distale ;
- **caractérisé par** un dispositif de protection (113) destiné à protéger le corps de déformation (111) contre les coups de bélier contre sa première surface et/ou à protéger le corps de déformation (111) contre des changements brusques de température au niveau de sa première surface,
- le dispositif de protection (113) comprenant au moins une plaque (113a) adjacente au segment de bord (111a) du corps de déformation (111), laquelle plaque s'étend radialement vers l'intérieur dans la direction de la languette de capteur, de telle sorte
-- qu'une cavité (113'), notamment en forme annulaire ou de disque annulaire, est formée entre la plaque et le corps de déformation, laquelle cavité reçoit une partie de la languette de capteur qui est adjacente à la première surface (111+) du corps de déformation (111) tout en étant éloignée de l'extrémité distale de la languette de capteur,
-- et qu'entre la plaque (113a) et la languette de capteur (112) est formé un interstice (113'), notamment annulaire.

2. Module capteur selon la revendication précédente, pour lequel la languette de capteur (112) est conçue pour être immergée dans un fluide ou pour être entourée par un fluide dans une zone s'étendant entre son extrémité distale et la plaque.

3. Module capteur selon la revendication précédente, pour lequel la cavité est conçue pour recevoir un volume partiel du fluide ou pour être remplie par un volume partiel du fluide via un interstice, notamment uniquement via un interstice.

4. Module capteur selon l'une des revendications précédentes, pour lequel la languette de capteur (112) est conçue pour être insérée dans un canal intérieur d'un tube guidant un fluide en écoulement ou pour être entourée par un fluide guidé dans le canal intérieur du même tube, dans une zone s'étendant entre son extrémité distale et la plaque.

5. Module capteur selon la revendication précédente, pour lequel la cavité est conçue pour communiquer avec le canal intérieur du tube par l'intermédiaire d'un interstice, notamment seulement par l'intermédiaire d'un interstice.

6. Module capteur selon l'une des revendications précédentes, pour lequel la plaque est formée par, notamment exactement, deux segments de plaque, notamment de construction identique ou de même taille, notamment de telle sorte que les deux segments de plaque se trouvent en face l'un de l'autre, en formant à chaque fois des bords de butée qui se prolongent dans l'interstice annulaire.

7. Module capteur selon la revendication précédente, pour lequel les deux segments de plaque sont reliés l'un à l'autre au moins partiellement par une liaison de matière, notamment de telle sorte que les deux segments de plaque sont soudés ou brasés l'un à l'autre au niveau de bords de butée mutuellement opposés.

8. Module capteur selon l'une des revendications précédentes,
- pour lequel le corps de déformation (111) et la languette de capteur (112) sont conçus pour être excités en des vibrations, notamment forcées, autour d'une position de repos statique commune et pour être ainsi déplacés par rapport au dispositif de protection (113) de telle sorte que la languette de capteur exécute des mouvements pendulaires déformant élastiquement le corps de déformation ; et/ou
- pour lequel le corps de déformation, la languette de capteur et le dispositif de protection sont dimensionnés et disposés de telle sorte que, lorsque la languette de capteur se trouve dans une position de repos statique commune avec le corps de déformation, la languette de capteur n'entre pas en contact avec la plaque du dispositif de protection ; et/ou
- pour lequel le corps de déformation, la languette de capteur et le dispositif de protection, notamment la plaque du dispositif de protection, sont dimensionnés et disposés de telle sorte que l'interstice présente une largeur minimale supérieure à 0,02 mm et/ou inférieure à 0,5 mm lorsque la languette de capteur se trouve avec le corps de déformation dans une position de repos statique commune ; et/ou
- pour lequel le corps de déformation, la languette de capteur et le dispositif de protection, notamment la plaque du dispositif de protection, sont dimensionnés et disposés de telle sorte que, lorsque la languette de capteur se trouve avec le corps de déformation dans une position de repos statique commune, l'interstice présente une largeur maximale qui est inférieure à 0,5 mm et/ou supérieure à 0,02 mm

9. Capteur destiné à mesurer les fluctuations de pression dans un fluide en écoulement, notamment destiné à mesurer les fluctuations de pression dans une allée de tourbillons selon Karman formée dans le fluide en écoulement, lequel capteur comprend :
- un module capteur (11) selon l'une des revendications précédentes ;
- ainsi qu'un élément transducteur (12) destiné à générer un signal de capteur, notamment électrique ou optique, représentant des mouvements variables dans le temps, notamment au moins temporairement périodiques, de la languette de capteur et/ou des déformations variables dans le temps, notamment au moins temporairement périodiques, du corps de déformation (111).

10. Système de mesure destiné à la mesure d'au moins un paramètre d'écoulement, notamment variable dans le temps, notamment une vitesse d'écoulement et/ou un débit volumique, d'un fluide s'écoulant dans une conduite, lequel système de mesure comprend :
- un capteur (1) selon la revendication 9, destiné à mesurer les fluctuations de pression dans le fluide en écoulement, notamment destiné à mesurer les fluctuations de pression dans une allée de tourbillons selon Karman formée dans le fluide en écoulement ;
- ainsi qu'une électronique de mesure (2), laquelle est conçue pour recevoir et traiter le signal du capteur, notamment pour générer des valeurs mesurées (X_{M}) représentant l'au moins un paramètre d'écoulement.

11. Système de mesure selon la revendication précédente, comprenant en outre : un tube (3) pouvant être inséré dans le parcours de ladite conduite et présentant un canal intérieur (3') conçu pour guider le fluide s'écoulant dans la conduite, le capteur (1) étant inséré dans ledit tube de telle sorte que la première surface du corps de déformation (111) fait face au canal intérieur (3') du tube et que la languette du capteur fait saillie dans ledit canal intérieur.

12. Système de mesure selon la revendication 10, comprenant en outre :
un tube (3) pouvant être inséré dans le parcours de ladite conduite et présentant un canal intérieur (3') conçu pour guider le fluide s'écoulant dans la conduite
- pour lequel une ouverture (3") est formée dans la paroi du tube (3), présentant notamment une douille (3a) servant à maintenir le corps de déformation (111) sur la paroi,
- et pour lequel le capteur (1) est inséré dans ladite ouverture (3") de telle sorte que le corps de déformation (111) recouvre l'ouverture (20'), notamment la ferme hermétiquement, et de telle sorte que la première surface du corps de déformation (111) est tournée vers le canal intérieur (3') du tube, c'est-à-dire que la languette du capteur fait saillie dans ledit canal intérieur.

13. Système de mesure selon l'une des revendications 11 à 12, pour lequel la languette de capteur (112) présente une longueur, mesurée comme une distance minimale entre une extrémité proximale de la languette de capteur (112), notamment adjacente au corps de déformation (111), et une extrémité distale de la languette de capteur (112), notamment éloignée du corps de déformation (111) ou de sa surface (111+), qui correspond à moins de 95 % d'un calibre (DN) du tube (3) et/ou à plus de la moitié de ce même calibre (DN).

14. Système de mesure selon l'une des revendications 10 à 13, comprenant en outre : un corps de retenue (4) disposé dans le canal intérieur du tube (3) et conçu pour provoquer une allée de tourbillons selon Karman dans le fluide en écoulement.

15. Utilisation d'un système de mesure selon l'une des revendications 10 à 14, lequel système est destiné à mesurer un paramètre d'écoulement - notamment une vitesse d'écoulement et/ou un débit volumique et/ou un débit massique - d'un fluide, notamment d'une vapeur, circulant dans une conduite, notamment au moins temporairement à une température supérieure à 400 °C et/ou au moins temporairement avec une pression supérieure à 140 bar, lequel fluide agit sur le corps de déformation et/ou la languette du capteur.
